(19) Europäisches Patentamt
European Patent Office
Office européen des brevets

(11) EP 3 217 296 A1

(12) **EUROPEAN PATENT APPLICATION**
published in accordance with Art. 153(4) EPC

(43) Date of publication:
**13.09.2017 Bulletin 2017/37**

(51) Int Cl.:
**G06F 17/30** (2006.01)

(21) Application number: **15876391.2**

(22) Date of filing: **20.07.2015**

(86) International application number:
**PCT/CN2015/084474**

(87) International publication number:
**WO 2016/134580 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.02.2015 CN 201510091427**

(71) Applicant: **Huawei Technologies Co. Ltd.**
**Shenzhen, Guangdong 518129 (CN)**

(72) Inventors:
• **ZHU, Wenqi**
**Shenzhen**
**Guangdong 518129 (CN)**

• **YANG, Yidong**
**Shenzhen**
**Guangdong 518129 (CN)**
• **ZHANG, Qing**
**Shenzhen**
**Guangdong 518129 (CN)**
• **YAO, Li**
**Shenzhen**
**Guangdong 518129 (CN)**
• **ZHU, Zhongchu**
**Shenzhen**
**Guangdong 518129 (CN)**

(74) Representative: **Maiwald Patentanwalts GmbH**
**Engineering**
**Elisenhof**
**Elisenstrasse 3**
**80335 München (DE)**

(54) **DATA QUERY METHOD AND APPARATUS**

(57)     The present invention provides a data query method and apparatus. The method includes: receiving a query request, where the query request includes a query condition, and the query condition relates to N different databases; calculating a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2; determining, in the M cross-database join processing manners, a cross-database join processing manner for current use according to the query cost of each cross-database join processing manner; and performing, by using the cross-database join processing manner for current use, in the N different databases, data query corresponding to the query condition.

Receive a query request, where the query request includes a query condition, and the query condition relates to N different databases — 101

Calculate a query cost of each cross-database join processing manner of M cross-database join processing manners — 102

Determine, in the M cross-database join processing manners, a cross-database join processing manner for current use according to the query cost of each cross-database join processing manner — 103

Perform, by using the cross-database join processing manner for current use, in the N different databases, data query corresponding to the query condition — 104

FIG. 3

**Description**

**TECHNICAL FIELD**

The present application relates to the field of computer technologies, and in particular, to a data query method and apparatus.

**BACKGROUND**

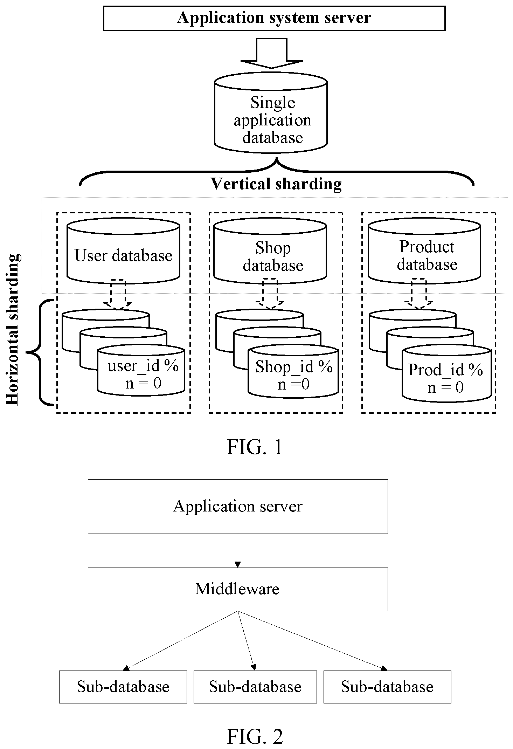

A basic idea of data sharding (Data Sharding) is to shard a database into multiple parts and store the multiple parts into different databases, so as to alleviate performance problems of a single database. Generally, for a database with mass data, if it is because there are many tables that there is a lot of data, it is proper to use vertical sharding, that is, closely related tables (for example, a same module) are sharded out of the database and stored on one server. If there are not many tables but each table has an extremely large amount of data, horizontal sharding is proper, that is, data in a table is sharded and stored into multiple databases according to a rule (for example, according to an ID hash). Certainly, in reality, it is more often that the two cases are mixed together. In this case, a choice needs to be made according to an actual situation. Vertical sharding and horizontal sharding may be used comprehensively, so that an original database is sharded into a database array (as shown in FIG. 1) that is similar to a matrix and that can be expanded infinitely, so as to improve high availability of an entire application system. As shown in FIG. 1, a single application database is vertically sharded according to different modules (such as user, shop, and product), so that three different databases are formed. After the vertical sharding, horizontal sharding is performed on each database (for example, the database is sharded according to the ID hash and stored into multiple databases).

However, such data distribution is faced up with a problem of cross-database join (Cross-database join). For example, a correspondence between all users and shops (select user_name,shop_name from user t1,shop t2 where t1.user_id = t2.user_id) is queried for. The query relates to two databases, and therefore, result data cannot be directly obtained from the related databases, and an application layer or a middleware layer is needed to perform cross-database join processing.

Multiple cross-database join processing manners are provided in the prior art. However, for a given system, once a cross-database join processing manner is selected, the selected manner is always used. Therefore, the cross-database join processing manner in the prior art is excessively monotonous, and is not flexible enough.

**SUMMARY**

The present application provides a data query method and apparatus, in order to resolve a technical problem in the prior art that a cross-database join processing manner is excessively monotonous, and is not flexible enough.

A first aspect of the present application provides a data query method, including:

receiving a query request, where the query request includes a query condition, the query condition relates to N different databases, and N is an integer greater than or equal to 2;

calculating a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2;

determining a cross-database join processing manner for current use according to the query cost of each cross-database join processing manner, where the cross-database join processing manner for current use is one of the M cross-database join processing manners; and

performing, by using the cross-database join processing manner for current use, in the N different databases, data query corresponding to the query condition.

With reference to the first aspect, in a first possible implementation manner of the first aspect, the calculating a query cost of each cross-database join processing manner of M cross-database join processing manners specifically includes:

acquiring statistical information corresponding to the query condition, of the N different databases; and

calculating the query cost of each cross-database join processing manner according to the statistical information and a cost parameter of an atomic operation item included in the cross-database join processing manner.

With reference to the first possible implementation manner of the first aspect, in a second possible implementation manner of the first aspect, the statistical information includes a quantity of records that correspond to the query condition and that are in the N different databases and a data length of each record; and

the calculating the query cost of each cross-database join processing manner according to the statistical information and a cost parameter of an atomic operation item included in the cross-database join processing manner, specifically includes:
obtaining a cost of each atomic operation item included in the cross-database join processing manner according to the record quantity, the data length, and the cost parameter of the atomic operation item; and
finding the sum of costs of all atomic operation items included in the cross-database join processing manner, to obtain the query cost of the cross-database join processing manner.

With reference to the second possible implementation manner of the first aspect, in a third possible implementation manner of the first aspect, the obtaining a cost of each atomic operation item included in the cross-database join processing manner according to the record quantity, the data length, and the cost parameter of the atomic operation item, specifically includes:

using a product obtained by multiplying the record quantity, the data length, and the cost parameter of the atomic operation item, as the cost of the atomic operation item included in the cross-database join processing manner.

With reference to the first aspect or any one of the first possible implementation manner of the first aspect to the third possible implementation manner of the first aspect, in a fourth possible implementation manner of the first aspect, when the cross-database join processing manner for current use is a first cross-database join processing manner,

the performing, by using the cross-database join processing manner for current use, in the N different databases, data query corresponding to the query condition specifically includes:

acquiring data corresponding to the query condition from the N different databases; and
performing a join operation on the data.

With reference to the first aspect or any one of the first possible implementation manner of the first aspect to the third possible implementation manner of the first aspect, in a fifth possible implementation manner of the first aspect, when the cross-database join processing manner for current use is a second cross-database join processing manner,

the performing, by using the cross-database join processing manner for current use, in the N different databases, data query corresponding to the query condition specifically includes:
sending data tables in N-1 databases of the N different databases to one remaining database;
creating a temporary data table according to the data tables;
acquiring data corresponding to the query condition from the temporary data table and the one remaining database; and
performing a join operation on the data.

A second aspect of the present application provides a data query apparatus, including:

a receiving unit, configured to receive a query request, where the query request includes a query condition, the query condition relates to N different databases, and N is an integer greater than or equal to 2;
a processing unit, configured to calculate a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2; and determine a cross-database join processing manner for current use according to the query cost of each cross-database join processing manner, where the cross-database join processing manner for current use is one of the M cross-database join processing manners; and
a query unit, configured to perform, by using the cross-database join processing manner for current use, in the N different databases, data query corresponding to the query condition.

With reference to the second aspect, in a first possible implementation manner of the second aspect, the processing unit is configured to acquire statistical information corresponding to the query condition, of the N different databases; and calculate the cost of each cross-database join processing manner according to the statistical information and a cost parameter of an atomic operation item included in the cross-database join processing manner.

With reference to the first possible implementation manner of the second aspect, in a second possible implementation manner of the second aspect, the statistical information includes a quantity of records that correspond to the query condition and that are in the at least two databases and a data length of each record; and the processing unit is specifically configured to obtain a cost of each atomic operation item included in the cross-database join processing manner according to the record quantity, the data length, and the cost parameter of the atomic operation item; and find the sum of costs of all atomic operation items included in the cross-database join processing manner, to obtain the cost of the cross-database join processing manner.

With reference to the second possible implementation manner of the second aspect, in a third possible implementation manner of the second aspect, the processing unit is specifically configured to use a product obtained by multiplying the record quantity, the data length, and the cost parameter of the atomic operation item, as the cost of the atomic operation item included in the cross-database join processing manner.

With reference to the second aspect or any one of the first possible implementation manner of the second aspect to the third possible implementation manner of the second aspect, in a fourth possible implementation manner of the second aspect, the query unit is specifically configured to: when the cross-database join processing manner for current use is a first cross-database join processing manner, acquire data corresponding to the query condition from the N different databases; and perform a join operation on the data.

With reference to the second aspect or any one of the first possible implementation manner of the second aspect to the third possible implementation manner of the second aspect, in a fifth possible implementation manner of the second aspect, the query unit is specifically configured to: when the cross-database join processing manner for current use is a second cross-database join processing manner, send data tables in N-1 databases of the N different databases to one remaining database; create a temporary data table according to the data tables; acquire data corresponding to the query condition from the temporary data table and the one remaining database; and perform a join operation on the data.

A third aspect of the present application provides a data query apparatus, including:

a receiver, configured to receive a query request, where the query request includes a query condition, the query condition relates to N different databases, and N is an integer greater than or equal to 2; and

a processor, configured to calculate a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2; and determine a cross-database join processing manner for current use according to the query cost of each cross-database join processing manner, where the cross-database join processing manner for current use is one of the M cross-database join processing manners; where the processor is further configured to perform, by using the cross-database join processing manner for current use, in the N different databases, data query corresponding to the query condition.

With reference to the third aspect, in a first possible implementation manner of the third aspect, the processor is configured to acquire statistical information corresponding to the query condition, of the N different databases; and calculate the cost of each cross-database join processing manner according to the statistical information and a cost parameter of an atomic operation item included in the cross-database join processing manner.

With reference to the first possible implementation manner of the third aspect, in a second possible implementation manner of the third aspect, the statistical information includes a quantity of records that correspond to the query condition and that are in the at least two databases and a data length of each record; and the processor is specifically configured to obtain a cost of each atomic operation item included in the cross-database join processing manner according to the record quantity, the data length, and the cost parameter of the atomic operation item; and find the sum of costs of all atomic operation items included in the cross-database join processing manner, to obtain the cost of the cross-database join processing manner.

With reference to the second possible implementation manner of the third aspect, in a third possible implementation manner of the third aspect, the processor is specifically configured to use a product obtained by multiplying the record quantity, the data length, and the cost parameter of the atomic operation item, as the cost of the atomic operation item included in the cross-database join processing manner.

With reference to the third aspect or any one of the first possible implementation manner of the third aspect to the third possible implementation manner of the third aspect, in a fourth possible implementation manner of the third aspect, the processor is specifically configured to: when the cross-database join processing manner for current use is a first cross-database join processing manner, acquire data corresponding to the query condition from the N different databases; and perform a join operation on the data.

With reference to the third aspect or any one of the first possible implementation manner of the third aspect to the third possible implementation manner of the third aspect, in a fifth possible implementation manner of the third aspect, the processor is specifically configured to: when the cross-database join processing manner for current use is a second cross-database join processing manner, send data tables in N-1 databases of the N different databases to one remaining database; create a temporary data table according to the data tables; acquire data corresponding to the query condition from the temporary data table and the one remaining database; and perform a join operation on the data.

The one or more technical solutions provided in the embodiments of the present application have at least the following technical effects or advantages:

In the embodiments of the present application, when a query request is received, if a query condition in the query request relates to at least two different databases, it indicates that cross-database join processing is required. Therefore, a query cost of each cross-database join processing manner of multiple cross-database join processing manners is calculated, and then which cross-database join processing manner is to be used to perform data query is determined according to the query cost of each cross-database join processing manner. Therefore, compared with the prior art in which only one cross-database join processing manner is fixedly used for each system, the method in the embodiments of the present application is capable of cost-based selection from multiple processing manners. Therefore, the method in the embodiments of the present application is more flexible with diversified processing manners.

## BRIEF DESCRIPTION OF DRAWINGS

FIG. 1 is a schematic diagram of data sharding in the prior art;
FIG. 2 is an architecture diagram of a system according to an embodiment of the present application;
FIG. 3 is a flowchart of a data query method according to an embodiment of the present application;
FIG. 4 is a functional block diagram of a data query apparatus according to an embodiment of the present application; and
FIG. 5 is a structural block diagram of an electronic device according to an embodiment of the present application.

## DESCRIPTION OF EMBODIMENTS

Embodiments of the present application provide a data query method and apparatus, in order to resolve a technical problem in the prior art that a cross-database join processing manner is excessively monotonous, and is not flexible enough.

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are merely some but not all of the embodiments of the present application. All other embodiments obtained by a person of ordinary skill in the art based on the embodiments of the present application without creative efforts shall fall within the protection scope of the present application.

Refer to FIG. 2, which is an architecture diagram of a system according to an embodiment of the present application. The system includes an application server, middleware, and sub-databases different from one another. In actual use, the middleware may be integrated into the application server; or the two are two devices that are physically separate from each other. The application server may receive or generate a query request. The middleware may perform, in the different sub-databases, data query corresponding to the query request.

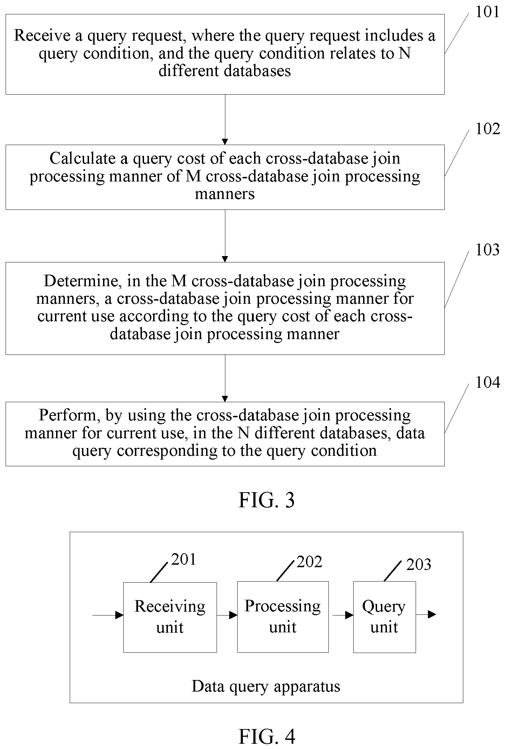

A specific implementation manner for generating a query request is well-known to a person skilled in the art, and therefore, is not further described herein. Next, refer to FIG. 3, which is a flowchart of a data query method according to an embodiment of the present application. The method may be executed by middleware. As shown in FIG. 3, the method includes the following content:

Step 101: Receive a query request, where the query request includes a query condition, the query condition relates to N different databases, and N is an integer greater than or equal to 2.

Step 102: Calculate a query cost of each cross-database join processing manner of M cross-database join processing manners, where M is an integer greater than or equal to 2, and the query cost of each cross-database join processing manner is a cost for performing, by using each cross-database join processing manner, in the N different databases, data query corresponding to the query condition.

Step 103: Determine, in the M cross-database join processing manners, a cross-database join processing manner for current use according to the query cost of each cross-database join processing manner.

Step 104: Perform, by using the cross-database join processing manner for current use, in the N different databases, data query corresponding to the query condition.

For ease of describing an implementation process of the data query method in this embodiment of the present application, the following describes a specific implementation manner of each step in detail.

In step 101, that the query condition relates to N different databases, and N is an integer greater than or equal to 2 means that data in two databases are different while structure types of the two databases may be the same or may be different. For example, the query condition is a correspondence between all users and shops, which is expressed as select user_name,shop_name from user t1,shop t2 where t1.user_id = t2.user_id by using a structured query language (English: Structured Query Language, SQL for short). Certainly, in actual use, another query language may also be used to express the query condition. The query condition in this example relates to two different databases, which are respectively a user database (user t1) and a shop database (shop t2). The user database and the shop database are two different sub-databases, for example, located in different servers. However, structure types of the two databases may be the same or may be different. A case in which the structure types of the two databases are the same is, for example, that the two databases are both oracle databases. A case in which the structure types of the two databases are different is, for example, that the user database is an oracle database and the shop database is, for example, a Sybase-type database. Certainly, in actual use, a structure type of a database may also be another type, which is not specifically limited in the present application. Because the query condition relates to at least two different databases, a cross-database join processing manner is needed to perform cross-database join query. A difference from the prior art in which a fixed cross-database join processing manner configured for a database or a system is used to perform data query is that step 102 is performed subsequently, that is, the query cost of each cross-database join processing manner of the M cross-database join processing manners is calculated.

The M cross-database join processing manners are specifically, for example, configured by a system. For example, it is assumed that there are three cross-database join processing manners in the prior art, but two processing manners thereof are configured for a system. Therefore, when calculation is performed in step 102, only query costs of the two processing manners thereof need to be calculated respectively. It should be noted that when a cross-database join processing manner is configured for the system, a processing manner supported by the system needs to be configured. The following first describes two frequently used cross-database join processing manners.

In a first cross-database join processing manner, middleware acquires, from joined databases, table data corresponding to a query condition. Then the middleware performs a join operation. In a second cross-database join processing manner, middleware delivers a join driving table to a destination database to form a temporary table, and then completes, in the destination database, a join operation on a destination table and the temporary table.

Join operations of the foregoing two types of cross-database joins may all be implemented by using multiple join algorithms, for example, nest-loop join (nest-loop join), hash join (hash join), and merge sort join (merge sort join).

It can be seen from the foregoing description that operation manners of the two cross-database join processing manners are different, and therefore performance consumption of the two cross-database join processing manners is also different. For the first cross-database join processing manner, its performance consumption lies in the acquisition of data from the joined databases, network transmission of the data meeting the query condition, and the join operation on joined tables. For the second cross-database join processing manner, its performance consumption lies in the acquisition of data from the join driving table, network transmission of the data of the join driving table, creation of and data import to the temporary table, and the join operation on the temporary table and the destination table.

For another cross-database join processing manner, performance consumption is also different because the processing manner is different. A performance consumption calculation manner is similar to the calculation manners in the foregoing two cross-database join processing manners. Specifically, calculation is performed according to an atomic operation item included in each processing manner. The atomic operation item is a minimum operation unit used to distinguish between different operation types.

An operation object for the atomic operation item corresponds to the query condition. The foregoing described user database and shop database are still used as an example. If the query condition is a correspondence between all users and shops, performance consumption by transmission of data of the two databases is related to a total record quantity of the two databases. If the query condition is a correspondence between users and shops in a given region, performance consumption by transmission of data of the two databases is related to a quantity of records obtained by screening according to the query condition "the given region".

Therefore, in a possible implementation manner, step 102 includes: acquiring statistical information corresponding to the query condition, of the N different databases; and calculating the query cost of each cross-database join processing manner according to the statistical information and a cost parameter of an atomic operation item included in each cross-database join processing manner.

The statistical information corresponding to the query condition includes a total record quantity of the N different databases related to the query condition, and a quantity of bytes in a column. Further, according to different query

## EP 3 217 296 A1

conditions, content further included in the statistical information may be different. For example, if the query condition further includes a screening condition, the statistical information further includes a quantity of records corresponding to the screening condition.

Specifically, one case of the acquiring statistical information corresponding to the query condition, of the N different databases may be: periodically acquiring, by a system, statistical information of each database, and then storing the acquired statistical information to a storage unit; and when step 102 is performed, directly acquiring, from the storage unit, the statistical information corresponding to the query condition. Another case may be: when step 102 is performed, sending a statistical information acquisition request to the N different databases, and then receiving statistical information sent by the N different databases.

For example, it is assumed that a system acquires statistical information periodically, and the acquired statistical information is stored in data dictionaries. The data dictionaries include, for example, a tables (tables) dictionary, an indexes (indexes) dictionary, and a columns (columns) dictionary.

The tables dictionary is as follows:

**Tables dictionary**

| Field Name | Description |
| --- | --- |
| NUM_ROWS | Quantity of records in a table. |
| BLOCKS | Total quantity of data blocks occupied by the table. |
| EMPTY_BLOCKS | Quantity of empty blocks that are used. |
| AVG_SPACE | Average free space (measured in bytes) allocated to the table, with all empty and free blocks counted. |
| CHAIN_CNT | Quantity of rows that are linked or migrated. |
| AVG_ROW_LEN | Average row length, measured in bytes. |
| LAST_ANALYZED | Time when statistical information of the table is last collected. |
| GLOBAL_STATS | Applied to a partition table, indicating whether statistical information of the table is based on a global table (YES) or based on a partition or a sub-partition (NO). |
| USER_STATS | Indicating whether statistical information of the table is directly set by a user. If the statistical information of the stable is directly set by a user, this field is YES; if the statistical information of the stable is not directly set by a user, this field is NO. |

The indexes dictionary is as follows:

**Indexes dictionary**

| Field Name | Description |
| --- | --- |
| BLEVEL | Depth of a B*-Tree index, from a root level to a leaf level. 0 indicates that a root node and a leaf node are the same. |
| LEAF_BLOCKS | Quantity of leaf-level blocks. |
| DISTINCT_KEYS | Quantity of single keys. For UNIQUE and PRIMARY KEY indexes, this value is a row quantity of a table (USER_TABLES.NUM_ROWS). |
| AVG_LEAF_BLOCKS_PER_KEY | Average quantity (rounded to an integer) of leaf node blocks where each single key appears. For UNIQUE and PRIMARY KEY indexes, this value is constantly 1. |
| AVG_DATA_BLOCKS_PER_KEY | Average quantity (rounded to an integer) of data blocks in a table to which each single key points. |

(continued)

| Field Name | Description |
|---|---|
| CLUSTERING_FACTOR | Factor deciding that data rows are sorted according to index keys. If the value is close to a quantity of data blocks of a table, data of the table is sorted according to index keys, that is, almost all records of a same index leaf node block point to records of a same data block in the table. If the value is close to a row quantity, it indicates that data in a table is arranged randomly, that is, records of a same index leaf node block point to records in multiple data blocks of the table. |
| LAST_ANALYZED | Time when statistical information of the table is last collected. |
| GLOBAL_STATS | Applied to a partition table, indicating whether statistical information of the table is based on a global table (YES) or based on a partition or a |
| | sub-partition (NO). |
| USER_STATS | Indicating whether statistical information of the table is directly set by a user. If the statistical information of the stable is directly set by a user, this field is YES; if the statistical information of the stable is not directly set by a user, this field is NO. |

The columns dictionary is as follows:

**Columns dictionary**

| Field Name | Description |
|---|---|
| NUM_DISTINCT | Quantity of single values (excluding NULL values). |
| LOW_VALUE | Lowest value. |
| HIGH_VALUE | Highest value. |
| DENSITY | Column aggregation degree (or density, which generally determines a quantity of rows returned in an equivalent condition). |
| NUM_NULLS | Quantity of records whose value is null (NULL) in a column. |
| NUM_BUCKETS | Quantity of bars (buckets) in a bar chart (histogram). |
| LAST_ANALYZED | Time when statistical information of the table is last collected. |
| GLOBAL_STATS | Applied to a partition table, indicating whether statistical information of the table is based on a global table (YES) or based on a partition or a sub-partition (NO). |
| USER_STATS | Indicating whether statistical information of the table is directly set by a user. If the statistical information of the stable is directly set by a user, this field is YES; if the statistical information of the stable is not directly set by a user, this field is NO. |
| HISTOGRAM | Identifying a histogram type: NONE: no histogram. FREQUENCY: frequency-based histogram (a quantity of buckets is equal to NUM_DISTINCT). HEIGHT BALANCED: height balanced histogram (a quantity of buckets is less than NUM_DISTINCT). |

The foregoing statistical information is merely an example. In actual use, the statistical information may also be other database-related statistical information, which is not specifically limited in the present application.

Because of different processing manners, atomic operation items included in one cross-database join processing manner are not completely the same as those in any other processing manner. In this embodiment of the present application, cost parameters of a few common atomic operation items are provided. For examples used for ease of describing the cost calculation manner in this embodiment of the present application, reference may be specifically made to Table 1.

**Table 1**

| Atomic operation item | Cost parameter |
|---|---|
| Physical read of a disk | 0.1 |
| Logical (cache) read of a disk | 0.2 |
| General read | 0.3 |
| Network transmission | 0.4 |
| Creation of a temporary table | 0.5 |
| Import of data into a temporary table | 0.6 |

In actual use, another manner may also be used to calculate the cost of each cross-database join processing manner, which is not specifically limited in the present application.

After the cost of each cross-database join processing manner is calculated in step 102, the cross-database join processing manner for current use is then determined in the M cross-database join processing manners according to the cost of each cross-database join processing manner, that is, step 103 is performed. Then data query corresponding to the query condition in step 101 is performed in the N different databases by using the determined cross-database join processing manner.

For example, when the determined cross-database join processing manner for current use is the foregoing first cross-database join processing manner, step 104 specifically includes: acquiring data corresponding to the query condition from the N different databases; and performing a join operation on the data.

When the determined cross-database join processing manner for current use is the foregoing second cross-database join processing manner, step 104 specifically includes: sending data tables in N-1 databases of the N different databases to one remaining database; creating a temporary data table according to the data tables; acquiring data corresponding to the query condition from the temporary data table and the one remaining database; and performing a join operation on the data.

It can be seen that, compared with the prior art in which only one cross-database join processing manner is fixedly used for each system, the method in this embodiment of the present application is capable of cost-based selection from multiple processing manners. Therefore, the method in this embodiment of the present application is more flexible with diversified processing manners.

Generally, for example, it may be determined that a cross-database join processing manner with a lowest cost is the cross-database join processing manner for current use. If a cost of performance consumption is the lowest, using this manner can reduce performance consumption of a system. If a time cost is the lowest, using this manner can shorten a query response time, so that a waiting time of a user is short and user experience is better.

In actual use, it may also be that, in processing manners whose costs are lower than a preset threshold, selection is further performed according to another condition, for example, random selection, or selection is performed according to priorities of the processing manners.

The foregoing first cross-database join processing manner and second cross-database join processing manner are used as examples in the following to describe processes for calculating query costs of the two cross-database join processing manners.

Assuming that the cost of the first cross-database join processing manner is Cost(manner 1), Cost(manner 1) may be calculated by using a formula (1).

$$\text{Cost(manner 1)} = \text{Cost}_{\text{Read}}(\text{TotalRows}(l\_t)) + \ldots + \text{Cost}_{\text{Read}}(\text{TotalRows}(r\_t)) + \text{Cost}_{\text{Net}}(\text{Rows}(l\_t)$$

$$+ \ldots + \text{Rows}(r\_t)) + \text{Cost}_{\text{User\_join}}(\text{Rows}(l\_t), \ldots, \text{Rows}(r\_t)) \quad \text{Formula (1)}$$

A value of r is an integer greater than or equal to 2. r indicates a quantity of databases and a number of a database that the query condition relates to. In the formula (1), $\text{Cost}_{\text{Read}}(\text{TotalRows}(2\_t))$ to $\text{Cost}_{\text{Read}}(\text{TotalRows}(r-1\_t))$ are omitted. $\text{TotalRows}(r\_t)$ indicates a total record quantity of a table r. $\text{Cost}_{\text{Read}}(\text{TotalRows}(r\_t))$ indicates a cost for reading all records in the table r. $\text{Rows}(r\_t)$ indicates a quantity of records returned from the table r that meet the query condition. $\text{Cost}_{\text{Net}}(\text{Rows}(1\_t) + \ldots + \text{Rows}(r\_t))$ indicates a cost for transmitting, on a network, records meeting the query condition in a table 1 to the table r. $\text{Cost}_{\text{User\_join}}(\text{Rows}(1\_t), \ldots, \text{Rows}(r\_t))$ indicates a cost for of joining, at an application layer, the records meeting the query condition in the table 1 to the table r.

Assuming that the cost of the second cross-database join processing manner is Cost(manner 2), Cost(manner 2) may be calculated by using a formula (2).

$$\text{Cost(manner 2)} = \text{Cost}_{\text{Read}}(\text{TotalRows}(1\_t)) + \text{Cost}_{\text{Net}}(\text{TotalRows}(1\_t)) + \text{Cost}_{\text{Tmp}}(\text{TotalRows}(1\_t))$$

$$+ \text{Cost}_{\text{DB\_join}}(\text{Rows}(1\_t), \dots, \text{Rows}(r\_t)) \qquad \text{Formula (2)}$$

$\text{Cost}_{\text{Net}}(\text{TotalRows}(1\_t))$ indicates a cost for transmitting the table 1. $\text{Cost}_{\text{Tmp}}(\text{TotalRows}(1\_t))$ indicates a cost for creating a temporary table and importing all records in the table 1 into the temporary table. $\text{Cost}_{\text{DB\_join}}(\text{Rows}(1\_t), \dots, \text{Rows}(r\_t))$ is a cost for joining the table 1 and the table r in a physical database, which may be equivalent to $\text{Cost}_{\text{User\_join}}(\text{Rows}(1\_t), \dots, \text{Rows}(r\_t))$ multiplied by a conversion factor.

It can be seen from the foregoing formulas that the statistical information includes a quantity of records that correspond to the query condition and that are in the N different databases and a data length of each record. Correspondingly, the calculating the query cost of each cross-database join processing manner according to the statistical information and a cost parameter of an atomic operation item included in the cross-database join processing manner specifically includes: obtaining a cost of each atomic operation item included in the cross-database join processing manner according to the record quantity, the data length, and the cost parameter of the atomic operation item; and finding the sum of costs of all atomic operation items included in the cross-database join processing manner, to obtain the query cost of the cross-database join processing manner.

Specifically, the obtaining a cost of each atomic operation item included in the cross-database join processing manner according to the record quantity, the data length, and the cost parameter of the atomic operation item specifically includes: using a product obtained by multiplying the record quantity, the data length, and the cost parameter of the atomic operation item, as the cost of the atomic operation item included in the cross-database join processing manner.

The following describes an implementation process of the data query method in this embodiment of the present application by using two specific examples.

In a first example, it is assumed that a received query condition is a correspondence between all users and shops, which is expressed by an SQL statement as select user_name,shop_name from user t1,shop t2 where t1.user_id = t2.user_id.

Acquired statistical information of a user database is that a total record quantity is 100w (ten thousand), an average data length of user_name is 20 bytes, and an average data length of user_id is 4 bytes. Acquired statistical information of a shop database is that a total record quantity is 5000w (ten thousand), an average data length of shop_name is 20 bytes, and an average data length of user_id is 4 bytes. Hash join is used as a join algorithm, and its cost is

$$\text{Cost}_{\text{hash-join}}(1\_t, r\_t) = \text{Min}(\text{Rows}(1\_t), \text{Rows}(r\_t)) * 0.01 + \text{Max}(\text{Rows}(1\_t), \text{Rows}(r\_t)) * 0.001.$$

Min() is an operation of taking a minimum value. Max() is an operation of taking a maximum value.

The formula (1) and the formula (2) are respectively used to calculate the costs of the first and the second cross-database join processing manners according to the cost parameters in Table 1:

$$\text{Cost(manner 1)} = (20 + 4) * (100w + 5000w) * 0.3 \text{ (data acquisition)} + (20 + 4) * (100w + 5000w) * 0.4 \text{ (network transmission)} + 4 * (100w * 0.1 + 5000w * 0.2) \text{ (middleware hash join)} = 37172.24004w.$$

$$\text{Cost(manner 2)} = (20 + 4) * 100w * 0.3 \text{ (data acquisition)} + (20 + 4) * 100w * 0.4 \text{ (network transmission)} + (20 + 4) * 100w * 1.1 \text{ (creation of a temporary table and import of data thereto)} + 4 * (100w * 0.1 + 5000w * 0.2) * 0.5 \text{ (physical database hash join)} = 4540w.$$

Then, the second cross-database join processing manner whose cost is lower is selected as the cross-database join processing manner for current use. The second cross-database join processing manner is used for data query.

In a second example, different from the first example, a correspondence between users and shops in a Shenzhen region is queried for, which is expressed by an SQL statement as select user_name,shop_name from user t1,shop t2 where t1.user_id = t2.user_id and t1.zone='shenzhen'and t2.register_zone='shenzhen'.

In addition, a total record quantity of the shop database is 100w. According to the filtering condition "shenzhen", there are 1000 records in the user database that meet the filtering condition, and 5000 records in the shop database that meet the filtering condition.

The formula (1) and the formula (2) are respectively used to calculate the costs of the first and the second cross-database join processing manners according to the cost parameters in Table 1:

$$\text{Cost(manner 1)} = (20 + 4) * (100w + 100w) * 0.3 \text{ (data acquisition)} + (20 + 4) * (0.1w + 0.5w) * 0.4 \text{ (network transmission)} + 4 * (0.1w * 0.1 + 0.5w * 0.2) \text{ (middleware hash join)} = 144.62w.$$

$$\text{Cost(manner 2)} = (20 + 4) * 100w * 0.3 \text{ (data acquisition)} + (20 + 4) * 100w * 0.4 \text{ (network transmission)} + (20 + 4) * 100w * 1.1 \text{ (creation of a temporary table and import of data thereto)} + 4 * (0.1w * 0.1 + 0.5w * 0.2) * 0.5 \text{ (physical database hash join)} = 462.022w.$$

Then, the first cross-database join processing manner whose cost is lower is selected as the cross-database join processing manner for current use. The first cross-database join processing manner is used for data query.

It can be seen that, in different query conditions, performance consumption of each cross-database join processing manner is also different. Therefore, in this embodiment of the present application, a cost-based selection policy is introduced to obtain a better cross-database join query processing manner, which improves overall performance of cross-database join query of a system.

Based on the same inventive concept, an embodiment of the present application further provides a data query apparatus. For meanings of terms and specific implementation related to the apparatus shown in FIG. 4, reference may be made to related descriptions of the foregoing FIG. 3 and embodiment.

Referring to FIG. 4, the apparatus includes: a receiving unit 201, configured to receive a query request, where the query request includes a query condition, the query condition relates to N different databases, and N is an integer greater than or equal to 2; a processing unit 202, configured to calculate a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2; and determine a cross-database join processing manner for current use according to the query cost of each cross-database join processing manner, where the cross-database join processing manner for current use is one of the M cross-database join processing manners; and a query unit 203, configured to perform, by using the cross-database join processing manner for current use, in the N different databases, data query corresponding to the query condition.

Optionally, the processing unit 202 is configured to acquire statistical information corresponding to the query condition, of the N different databases; and calculate the cost of each cross-database join processing manner according to the statistical information and a cost parameter of an atomic operation item included in the cross-database join processing manner.

Optionally, the statistical information includes a quantity of records that correspond to the query condition and that are in the at least two databases and a data length of each record; and the processing unit 202 is specifically configured to obtain a cost of each atomic operation item included in the cross-database join processing manner according to the record quantity, the data length, and the cost parameter of the atomic operation item; and find the sum of costs of all atomic operation items included in the cross-database join processing manner, to obtain the cost of the cross-database join processing manner.

Optionally, the processing unit 202 is specifically configured to use a product obtained by multiplying the record quantity, the data length, and the cost parameter of the atomic operation item, as the cost of the atomic operation item included in the cross-database join processing manner.

Optionally, the query unit 203 is specifically configured to: when the cross-database join processing manner for current use is a first cross-database join processing manner, acquire data corresponding to the query condition from the N different databases; and perform a join operation on the data.

Optionally, the query unit 203 is specifically configured to: when the cross-database join processing manner for current use is a second cross-database join processing manner, send data tables in N-1 databases of the N different databases to one remaining database; create a temporary data table according to the data tables; acquire data corresponding to the query condition from the temporary data table and the one remaining database; and perform a join operation on the data.

The variant manners and specific examples in the data query method in the foregoing embodiment shown in FIG. 2 are also applicable to the data query apparatus in this embodiment. From the detailed description of the foregoing data query method, a person skilled in the art can clearly know an implementation method of the data query apparatus in this embodiment, and therefore, details are not described herein again for brevity of the specification.

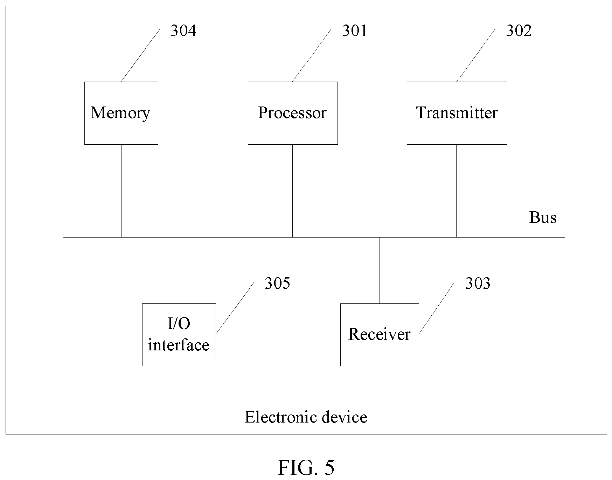

Based on the same inventive concept, an embodiment of the present application further provides an electronic device. For meanings of terms and specific implementation related to an electronic device shown in FIG. 5, reference may be made to related descriptions of the foregoing FIG. 3 and embodiment.

As shown in FIG. 5, the electronic device includes: a processor 301, a transmitter 302, a receiver 303, a memory 304, and an input/output (I/O) interface 305. The processor 301 may be specifically a universal central processing unit (CPU), may be an application specific integrated circuit (English: Application Specific Integrated Circuit, ASIC for short), or may be one or more integrated circuits used for controlling program execution. The I/O interface 305 may be connected to a keyboard, a mouse, a touchscreen device, a voice-activated input module, a display, a camera, and the like. There may be one or more memories 304. The memory 304 may include a read-only memory (English: Read Only Memory, ROM for short), a random access memory (English: Random Access Memory, RAM for short), and a disk memory. These memories, the receiver 303, and the transmitter 302 are connected to the processor 301 by means of a bus. The receiver 303 and the transmitter 302 are configured to perform network communication with an external device, and may specifically communicate with the external device by means of a network such as the Ethernet, a radio access network, or a wireless local area network. Physically, the receiver 303 and the transmitter 302 may be two mutually independent components, or may be a same component.

The memory 304 may store an instruction, and the processor 301 may execute the instruction stored in the memory 304.

Specifically, the receiver 303 is configured to receive a query request, where the query request includes a query condition, the query condition relates to N different databases, and N is an integer greater than or equal to 2; the processor 301 is configured to calculate a query cost of each cross-database join processing manner of M cross-database join processing manners, where the query cost of each cross-database join processing manner is a cost for performing, by using each cross-database join processing manner, in the N different databases, data query corresponding to the query condition, and M is an integer greater than or equal to 2; and determine a cross-database join processing manner for current use according to the query cost of each cross-database join processing manner, where the cross-database join processing manner for current use is one of the M cross-database join processing manners; and the processor 301 is further configured to perform, by using the cross-database join processing manner for current use, in the N different databases, data query corresponding to the query condition.

Optionally, the processor 301 is configured to acquire statistical information corresponding to the query condition, of the N different databases; and calculate the cost of each cross-database join processing manner according to the statistical information and a cost parameter of an atomic operation item included in the cross-database join processing manner.

Optionally, the statistical information includes a quantity of records that correspond to the query condition and that are in the at least two databases and a data length of each record; and the processor 301 is specifically configured to obtain a cost of each atomic operation item included in the cross-database join processing manner according to the record quantity, the data length, and the cost parameter of the atomic operation item; and find the sum of costs of all atomic operation items included in the cross-database join processing manner, to obtain the cost of the cross-database join processing manner.

Optionally, the processor 301 is specifically configured to use a product obtained by multiplying the record quantity, the data length, and the cost parameter of the atomic operation item, as the cost of the atomic operation item included in the cross-database join processing manner. Optionally, the processor 301 is specifically configured to: when the cross-database join processing manner for current use is a first cross-database join processing manner, acquire data corresponding to the query condition from the N different databases; and perform a join operation on the data.

Optionally, the processor 301 is specifically configured to: when the cross-database join processing manner for current use is a second cross-database join processing manner, send data tables in N-1 databases of the N different databases to one remaining database; create a temporary data table according to the data tables; acquire data corresponding to the query condition from the temporary data table and the one remaining database; and perform a join operation on the data.

The electronic device in this embodiment of the present application is, for example, the middleware in the foregoing embodiment.

The variant manners and specific examples in the data query method in the foregoing embodiment shown in FIG. 2 are also applicable to the electronic device in this embodiment. From the detailed description of the foregoing data query method, a person skilled in the art can clearly know an implementation method of the electronic device in this embodiment, and therefore, details are not described herein again for brevity of the specification.

The one or more technical solutions provided in the embodiments of the present application have at least the following technical effects or advantages:

In the embodiments of the present application, when a query request is received, if a query condition in the query request relates to at least two different databases, it indicates that cross-database join processing is required. Therefore, a cost of each cross-database join processing manner of multiple cross-database join processing manners is calculated, and then which cross-database join processing manner is to be used to perform data query is determined according to the cost of each cross-database join processing manner. Therefore, compared with the prior art in which only one cross-database join processing manner is fixedly used for each system, the method in the embodiments of the present application is capable of cost-based selection from multiple processing manners. Therefore, the method in the embodiments of the present application is more flexible with diversified processing manners.

A person skilled in the art should understand that the embodiments of the present application may be provided as a method, a system, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, an optical memory, and the like) that include computer-usable program code.

The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present application without departing from the spirit and scope of the present application. The present application is intended to cover these modifications and variations provided that they fall within the scope of protection defined by the claims and their equivalent technologies.

**Claims**

1. A data query method, comprising:

   receiving a query request, wherein the query request comprises a query condition, the query condition relates to N different databases, and N is an integer greater than or equal to 2;
   calculating a query cost of each cross-database join processing manner of M cross-database join processing manners, wherein the query cost of each cross-database join processing manner is a cost for performing, by using each cross-database join processing manner, in the N different databases, data query corresponding to the query condition, and M is an integer greater than or equal to 2;
   determining a cross-database join processing manner for current use according to the query cost of each cross-database join processing manner, wherein the cross-database join processing manner for current use is one of the M cross-database join processing manners; and

performing, by using the cross-database join processing manner for current use, in the N different databases, data query corresponding to the query condition.

2. The method according to claim 1, wherein the calculating a query cost of each cross-database join processing manner of M cross-database join processing manners specifically comprises:

   acquiring statistical information corresponding to the query condition, of the N different databases; and calculating the query cost of each cross-database join processing manner according to the statistical information and a cost parameter of an atomic operation item comprised in the cross-database join processing manner.

3. The method according to claim 2, wherein the statistical information comprises a quantity of records that correspond to the query condition and that are in the N different databases and a data length of each record; and the calculating the query cost of each cross-database join processing manner according to the statistical information and a cost parameter of an atomic operation item comprised in the cross-database join processing manner, specifically comprises:

   obtaining a cost of each atomic operation item comprised in the cross-database join processing manner according to the record quantity, the data length, and the cost parameter of the atomic operation item; and finding the sum of costs of all atomic operation items comprised in the cross-database join processing manner, to obtain the query cost of the cross-database join processing manner.

4. The method according to claim 3, wherein the obtaining a cost of each atomic operation item comprised in the cross-database join processing manner according to the record quantity, the data length, and the cost parameter of the atomic operation item, specifically comprises:

   using a product obtained by multiplying the record quantity, the data length, and the cost parameter of the atomic operation item, as the cost of the atomic operation item comprised in the cross-database join processing manner.

5. The method according to any one of claims 1 to 4, wherein when the cross-database join processing manner for current use is a first cross-database join processing manner, the performing, by using the cross-database join processing manner for current use, in the N different databases, data query corresponding to the query condition specifically comprises:

   acquiring data corresponding to the query condition from the N different databases; and performing a join operation on the data.

6. The method according to any one of claims 1 to 4, wherein when the cross-database join processing manner for current use is a second cross-database join processing manner, the performing, by using the cross-database join processing manner for current use, in the N different databases, data query corresponding to the query condition specifically comprises:

   sending data tables in N-1 databases of the N different databases to one remaining database; creating a temporary data table according to the data tables; acquiring data corresponding to the query condition from the temporary data table and the one remaining database; and performing a join operation on the data.

7. A data query apparatus, comprising:

   a receiving unit, configured to receive a query request, wherein the query request comprises a query condition, the query condition relates to N different databases, and N is an integer greater than or equal to 2; a processing unit, configured to calculate a query cost of each cross-database join processing manner of M cross-database join processing manners, wherein the query cost of each cross-database join processing manner is a cost for performing, by using each cross-database join processing manner, in the N different databases, data query corresponding to the query condition, and M is an integer greater than or equal to 2; and determine a cross-database join processing manner for current use according to the query cost of each cross-database join processing manner, wherein the cross-database join processing manner for current use is one of the M cross-database join processing manners; and

a query unit, configured to perform, by using the cross-database join processing manner for current use, in the N different databases, data query corresponding to the query condition.

8. The apparatus according to claim 7, wherein the processing unit is configured to acquire statistical information corresponding to the query condition, of the N different databases; and calculate the cost of each cross-database join processing manner according to the statistical information and a cost parameter of an atomic operation item comprised in the cross-database join processing manner.

9. The apparatus according to claim 8, wherein the statistical information comprises a quantity of records that correspond to the query condition and that are in the at least two databases and a data length of each record; and the processing unit is specifically configured to obtain a cost of each atomic operation item comprised in the cross-database join processing manner according to the record quantity, the data length, and the cost parameter of the atomic operation item; and find the sum of costs of all atomic operation items comprised in the cross-database join processing manner, to obtain the cost of the cross-database join processing manner.

10. The apparatus according to claim 9, wherein the processing unit is specifically configured to use a product obtained by multiplying the record quantity, the data length, and the cost parameter of the atomic operation item, as the cost of the atomic operation item comprised in the cross-database join processing manner.

11. The apparatus according to any one of claims 7 to 10, wherein the query unit is specifically configured to: when the cross-database join processing manner for current use is a first cross-database join processing manner, acquire data corresponding to the query condition from the N different databases; and perform a join operation on the data.

12. The apparatus according to any one of claims 7 to 10, wherein the query unit is specifically configured to: when the cross-database join processing manner for current use is a second cross-database join processing manner, send data tables in N-1 databases of the N different databases to one remaining database; create a temporary data table according to the data tables; acquire data corresponding to the query condition from the temporary data table and the one remaining database; and perform a join operation on the data.

**Application system server**

Single
application
database

**Vertical sharding**

**Horizontal sharding**

User database

Shop
database

Product
database

user_id %
n = 0

Shop_id %
n =0

Prod_id %
n = 0

FIG. 1

Application server

Middleware

Sub-database

Sub-database

Sub-database

FIG. 2

Receive a query request, where the query request includes a query condition, and the query condition relates to N different databases /101

Calculate a query cost of each cross-database join processing manner of M cross-database join processing manners /102

Determine, in the M cross-database join processing manners, a cross-database join processing manner for current use according to the query cost of each cross-database join processing manner /103

Perform, by using the cross-database join processing manner for current use, in the N different databases, data query corresponding to the query condition /104

FIG. 3

/201 Receiving unit  /202 Processing unit  /203 Query unit

Data query apparatus

FIG. 4

FIG. 5

# INTERNATIONAL SEARCH REPORT

| International application No. |
|---|
| PCT/CN2015/084474 |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, DWPI: database, query, cost

## C. DOCUMENTS CONSIDERED TO BE RELEVANT

| Category* | Citation of document, with indication, where appropriate, of the relevant passages | Relevant to claim No. |
|---|---|---|
| A | CN 103324742 A (HUAWEI TECHNOLOGIES CO., LTD.) 25 September 2013 (25.09.2013) the whole document | 1-12 |
| A | CN 104008135 A (NANJING POSTS & TELECOM UNIVERSITY) 27 August 2014 (27.08.2014) the whole document | 1-12 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 August 2015 | 16 September 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LI, Yuan Telephone No. (86-10) 62089533 |
|---|---|

Form PCT/ISA/210 (second sheet) (July 2009)

**INTERNATIONAL SEARCH REPORT**
Information on patent family members

| International application No. |
| --- |
| PCT/CN2015/084474 |

| Patent Documents referred in the Report | Publication Date | Patent Family | Publication Date |
| --- | --- | --- | --- |
| CN 103324724 A | 25 September 2013 | None | |
| CN 104008135 A | 27 August 2014 | None | |

Form PCT/ISA /210 (patent family annex) (July 2009)